# EUROPEAN PATENT APPLICATION

(11) **EP 4 014 717 A1**
(43) Date of publication of application: **22.06.2022**
(21) Application number: 21214600.5
(22) Date of filing: 15.12.2021
(51) Int. Cl.: A01G 7/04

(54) **METHOD AND APPARATUS FOR INHIBITING FUNGAL HYPHAE GROWTH IN SOILLESS CULTIVATION**

(30) Priority: 17.12.2020 IT 202000031151
(71) Applicant: C-LED S.R.L., 40026 Imola (BO) (IT)
(72) Inventor: Accorsi, Mattia, 40026 Imola (BO) (IT)
(74) Representative: Del Nero, Susanna

(57) **Abstract**

Method for inhibiting the growth of fungal hyphae in cultivation systems in controlled light environments, wherein horticultural and/or ornamental plants are cultivated using LED lamps (10) comprising at least a LED (B) emitting blue light having a wavelength of 400-500 nm;
**characterized in that**
said lamps emit blue light for a percentage ranging 30-50%, preferably 35-50% of the PAR for 10-20 hours a day for at least a portion of the plant lifecycle, from germination to harvest.

## Description

The present invention relates to the field of plants cultivated in growing rooms in a total absence of sunlight, in greenhouses, or anyway in controlled growing environments. In particular, the invention relates to the use of light sources having a wavelength ranging 400-500 nm, conventionally known as blue light or radiation, for a composition ranging 30-50%, preferably ranging 35-50%, of the Photosynthetically Active Radiation (PAR). Said spectral composition can control the growing of fungal hyphae.

Using LED lamps to cultivate plants in controlled environments is known, in order to increase the productive cycles and the quantity of product cultivated throughout the year. With the objective to irradiate a photosynthetically active light, such lamps typically comprise LEDs emitting red radiation (620-670 nm), LEDs emitting blue radiation (400-500 nm), LEDs emitting white/green radiation (500-600 nm), LEDs emitting far-red radiation (620-670 nm). Moreover, it also known that modifying the ratio between blue and red frequencies morphologic modifications of plants can be obtained, as widely shown.

Biologists measure the quantity of Photosynthetically Active Radiation (PAR) received by a plant. PAR indicates the spectral range from 400 to 700 nanometres, which generally corresponds to the spectral range (see the wavelengths quoted in the above paragraph) that photosynthetic organisms can use in photosynthetic processes.

The irradiance of PAR can be expressed in units of energy flux (W/m²). Preferably, flux is measured on a surface for a specified amount of time: Photosynthetic Photon Flux Density (PPFD) measured as mol m⁻²s⁻¹.

According to a manufacturer of lamps for the growth of plants, plants require at least a level of light between 100 and 1000 µmol m⁻²s⁻¹. Such irradiation can be reached with lamps having a typical power ranging 20 to 600 Watt.

Scientific bibliography and state of the art concerning lamps for cultivation without natural light provide that such LED lamps emit a quantity of blue light ranging 20-30% of PAR. It is known that blue radiation is responsible for the main physiologic responses of plants (stomatal opening and evaporation/transpiration), and therefore the skilled person is reluctant to change a consolidated protocol. So far, the main variations in the PAR spectrum were performed by changing the percentage of red and far-red radiations, which are known to modify the quantitative yield of cultures.

An example of known art is the document US 10806095B2 of Signify Holding B.V. Such document discloses a lighting module restricted to operate in a plurality of discrete modes, which emit light with different discrete spectral compositions. In particular, the document illustrates general concepts of the known art, like the fact that the light spectrum administered to plants influences the morphological development of plants, e.g. plants flowering and/or stem elongation.

Another example of known art is patent application EP2761993A1 of Showa Denko KK, which proposes a method for cultivating plants. Such method comprises a red light irradiation step A and a blue light irradiation step B, wherein the step A and the step B are independently carried out for a predetermined period of time under cultivation conditions such that a fertilizer is used at each of the step A and the step B. it is worth mentioning that the document does not hint to fungi or fungal hyphae in any of its portions.

It is known that cultivations can be affected by fungal contaminations, which reduce the quality and/or the quantity of the crop or of the cultivated plant. Well-known fungal pathogens are e.g. *Sclerotinia homeocarpa, Phytium spp., Botrytis cinerea.*

In the art, traditional agriculture makes use of chemical active principles, which can be more or less selective, in order to fight the development of fungal hyphae at different stages of growth of the fungal pathogen: e.g. glyphosates, or difenoconazole or propiconazole or tebuconazole. Regretfully, it is also known that such molecules leach into groundwater. Some even believe that the present exponential increase in celiac disease is actually due to the presence of glyphosates in the final food products manufactured from wheat cultivated using such molecules.

In special situations, like e.g. organic agriculture, the use of chemical products is not permitted.

The European Green Deal is a set of political initiatives conducted by the European Commission with the general objective to reach climate neutrality in Europe within 2050. One of its objectives is the sustainability of cultivations, not only through a sustainable use of natural resources (water, soil), but also through a marked reduction or stop of the introduction of chemical substances into soil and therefore in groundwater.

Aim of the present invention is providing a method and an apparatus alternative to the use of chemical substances for growing ornamental and/or edible plants cultivated in artificial conditions for the prevention and the cure of fungal pathologies in plants.

This object is achieved by a method and an apparatus having the features of the independent claims. Advantageous embodiment and refinements are specified in the claims dependent thereon.

The object is achieved by using a quantity of blue light (400-500 nm) in a percentage of the total spectrum ranging 30-50%, preferably ranging 35-50% of the PAR, so that the development of fungal hyphae in soil is inhibited, blocking their propagation inside the plants.

The method according to the present invention provides to irradiate growing plants with said blue light for a duration of 10-20 hours per day, for at least a portion of the growing of the plant, from germination to harvest.

The effect of inhibition occurs in any typology of plants, horticultural, fruit, leaf or ornamental plants, in that the inhibiting effect is not due to a strengthening of the plant affected by fungal hyphae, but is surprisingly due to a direct physical process of inhibition of the growth of fungal hyphae.

In a first embodiment, the required percentage of 30-50%, preferably 35-50%, of blue radiation in the PAR is administered by suitably choosing the number and the kind of blue LEDs placed in a greenhouse LED lamp. Said LED lamps are provided in a simpler form, which cannot be controlled, and emit always the same spectrum.

In a second embodiment, the required percentage of 30-50%, preferably 35-50%, of blue radiation in the PAR is administered by suitably controlling the different kind of LEDs provided in the LED lamp. Consequently, the LED lamp is electronically controlled in order to emit PAR spectra of different kinds according to the plant and/or the plant's stage of growth and/or to fight a fungal pathology occurred in the cultivation.

In a third embodiment, said LED lamps comprise blue LEDs of suitable wavelength only, which blue LED lamps can be combined with LED lamps already installed in a greenhouse as a retrofit, when the already installed LED lamps do not comprise blue LEDs or are provided with an insufficient quantity of blue LEDs. Growers might buy and install, or work, the lamps comprising blue LEDs only, should a serious fungal pathology occur in their greenhouses.

A first advantage of the present invention consists in ensuring the ideal development of commercial plants, preventing the occurrence of fungal pathologies, without using synthetic chemical substances. This advantage is particularly meaningful in organic agriculture, wherein the use of chemical substances is not permitted.

A second advantage is the marked reduction of the diffusion and propagation of fungal pathologies affecting plants cultivated in artificial conditions, and consequently the reduction of chemical substances utilized to control or eliminate such pathologies. The diseased plant can be removed by the growing environment without the need to treat the area in order to remove the pathogen, in particular fungal spores.

A third advantage of the present invention is the reuse of a structure already present in greenhouses, i.e. the LED lamps, to perform the irradiation with blue radiations in suitable quantity and quality. This means being able to irradiate without the need of new mechanical works, when said LED lamps are provided with an electronic control allowing to vary their emission spectrum. Alternatively, additional lamps comprising blue LEDs only can be added to the already installed lamps, in order to irradiate plants with a quantity and quality of blue light according to the present invention.

Further advantages and properties of the present invention are disclosed in the following description, in which exemplary embodiments of the present invention are explained in detail based on the drawings:
- Figure 1: Axonometric view of an exploded view of the lamp according to the present invention;
- Figure 2: Detail of a LED module with LEDs of four different kinds;
- Figure 3A, 3B: Comparison between two photographs showing plants cultivated in different lighting conditions.

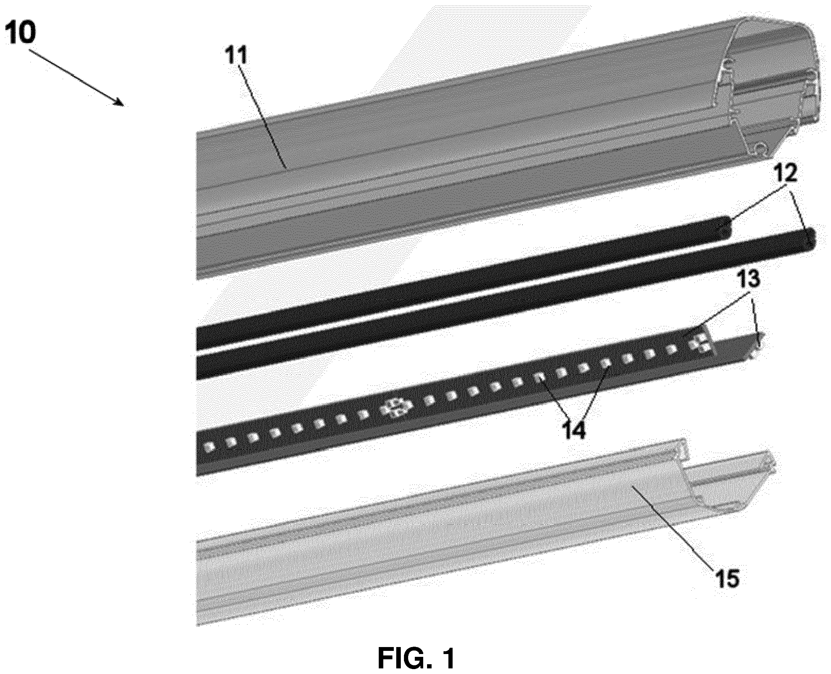

Figure 1 shows an exploded view of a preferred embodiment of a lamp 10 according to the present invention; the lamp comprises:
- A metal frame 11, which in the preferred embodiment is made of aluminium;
- A couple of gaskets 12;
- A couple of PCBs (electronic boards) 13, on which a plurality of LEDs 14 are mounted at a regular distance;
- A cover 15 in a transparent material, allowing to insulate the LEDs from the exterior environment, while ensuring the transmission of the light emitted.

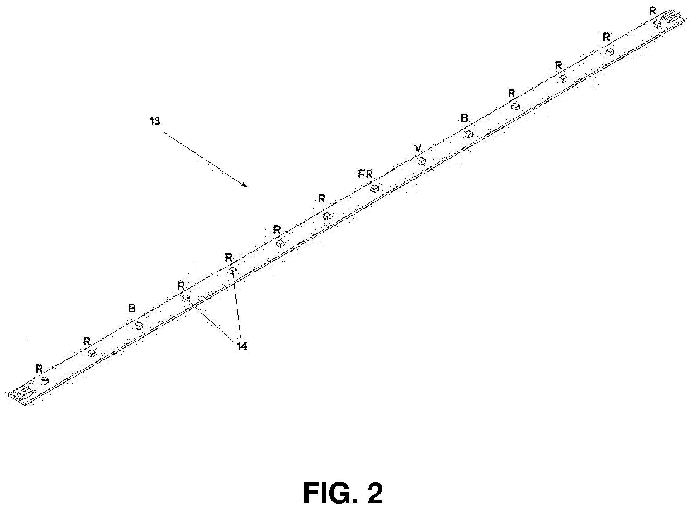

Figure 2 shows an exemplary, non-limiting embodiment of the present invention, wherein LED module 13 comprises four distinct kinds of LEDs 14:
- A first kind of LEDs, indicated with R, emitting red light (620-670 nm);
- A second kind of LEDs, indicated with B, emitting blue light (400-500 nm);
- A third kind of LEDs, indicated with FR (from Far-Red), emitting far-red radiations indicatively having a wavelength of 710-850 nm;
- A fourth kind of LEDs, indicated with V (from Visible light), emitting visible light, indicatively having a wavelength of 500-600 nm.

In particular, Figure 2 shows the first and the second embodiment of the present invention, wherein LED lamps 10 are provided with a plurality of LEDs of different kind (R, B, optionally FR, optionally V).

In the first simpler, cheaper embodiment, the percentage of 30-50%, preferably 35-50%, of blue light of the PAR is irradiated by suitably choosing the number and the kind of blue LEDs placed in a greenhouse LED lamp. No electronic control of said LEDs is provided, and the lamp emits always the same spectrum.

In the second embodiment, more sophisticated but more costly, the percentage of 30-50%, preferably 35-50%, of blue light of the PAR is irradiated by suitably controlling the different LEDs placed in the LED lamp. Consequently, said LED lamp is electronically controlled in order to emit PARs of different kinds according to the kind of plant and/or its growing stage and/or to fight a fungal pathology occurred in the cultivation.

In an embodiment, a plurality of LED lamps 10 are controlled by a not shown control unit. Said control unit comprises different operating units, which can be both hardware operating units, and programmable hardware units, and in the form of a series of programs codifying the instructions for executing the functions of the single operating units. Said instructions and/or programs, performed by the hardware of control unit in the form of generic processor, configure it and the optional peripherals so as to generate the functions provided by the single operating units.

Specifically, said control unit provides a CPU managing the sundry operating units, which coordinates the operation of the following operating units: a control unit controlling the frequency of emission according to the above-described modalities; a clock for setting the switch on and off time; an interface communicating with optional detectors, a user interface to input settings and commands; a memory for the controlling and setting program launched by the user interface, which is performed at least partially in an automatic way by CPU, and a communication interface with the single lamps. Advantageously, each lamp can be associated to a univocal identifier, and have a univocal communication address with the control unit. Obviously, the control unit comprises the drivers of coloured LEDs or LEDs emitting specific spectra, according to the different above-described combinations.

In a particularly preferred embodiment, the so-called cultivation recipes are saved in said memory, i.e. the specific combinations of spectra emitted for pre-defined times in order to obtain specific growing patterns of the plants, e.g. the induction of flowering. Said recipes are recallable from said memory according to need, to control the emission of the LED lamps placed in a greenhouse.

In a third embodiment, which can be defined a retrofit embodiment, the LED lamps according to the present invention comprise blue LEDs only, emitting a suitable wavelength. Said lamps comprising just blue LEDs can be placed near the LED lamps already installed in a greenhouse, should a severe fungal pathology occur in said greenhouse. Alternatively, should the cultivator already be provided with said blue LED lamps according to the third embodiment, she/he would put them in operation only in case of need.

The curing/preventing effect is obtained always setting a percentage of blue of 30-50%, preferably 35-50%, of the overall PAR for an emission time of 10-20 hours a day. In this case, the overall PAR means the sum of the emissions irradiated by the LED lamps already installed in the greenhouse and by the LED lamps comprising blue LEDs only. The intensity of the light is variable according to the plants under culture, and therefore of the specific requirements of Daily Light Integral (DLI) expressed as moles/photon days.

The experimentations on strawberry plants, started before the filing of the present application, are still under way. Experimentally, it was shown that with a percentage of blue light around 22% of the PAR, no inhibition of the growth of fungal hyphae is shown. The inhibiting effect starts to show at percentages of blue light around 28% of the PAR. The number of continuous light-hours needed to obtain an inhibiting effect is 12-16 hours per day; the intensity of the light must be 100-250 PPFD. With the above-mentioned parameters, the inhibiting effect of the blue light on the growth of fungal hyphae ranged -45% to -95%, with better results obtained by increasing the percentage of blue light of the PAR, starting from 35% up to 50% of the PAR.

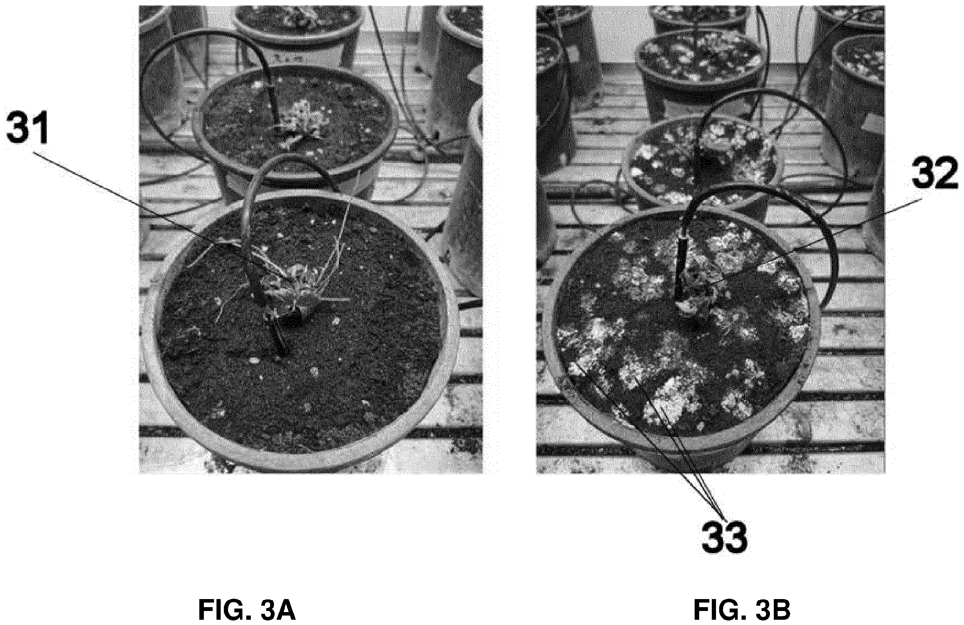

The comparison between Figures 3A, 3B allows to visually appreciate the difference between a strawberry plant cultivated according to the method of the present invention (3A) and a strawberry plant cultivated with a traditional lighting (3B). The hue of the photographs appears purple due to the presence in the LED lamps of red and far-red LEDs. Said strawberry plants are cultivated in pots; even to an untrained eye, the plant 31 is much healthier than plant 32. In the pot of Figure 3B there are numerous spots produced by fungal contamination, totally absent in the pot of Figure 3A.
- 10: LED lamp
- 11: Metal frame
- 12: Gasket
- 13: PCB
- 14: LED
- 15: Transparent cover
- 31: Plant
- 32: Plant
- 33: Fungal hyphae

## Claims

1. Method for inhibiting the growth of fungal hyphae in cultivation systems in controlled light environments, wherein horticultural and/or ornamental plants are cultivated using LED lamps (10) comprising at least a LED (B) emitting blue light having a wavelength of 400-500 nm;
**characterized in that**
said lamps emit blue light for a percentage ranging 30-50%, preferably 35-50% of the PAR for 10-20 hours a day for at least a portion of the plant lifecycle, from germination to harvest.

2. Method for inhibiting the growth of fungal hyphae in cultivation systems occurring in controlled light environments according to claim 1, wherein said lamps emit blue light for a percentage ranging 30-50%, preferably 35-50% of the PAR for 10-20 hours a day for the complete plant lifecycle, from germination to harvest.

3. Method for inhibiting the growth of fungal hyphae in cultivation systems occurring in controlled light environments according to claim 1, wherein said lamps emit blue light for a percentage ranging 30-50%, preferably 35-50% of the PAR for 10-20 hours only after the fungal contamination occurred.

4. LED lamp (10) for performing the method according to claims 1-3, comprising:
- at least a LED (B) emitting blue light with a wavelength of 400-500 nm;
- at least a LED (R) emitting red light with a wavelength of 620-670 nm;
- optionally at least a LED (FR) emitting far-red light with a wavelength of 710-850 nm;
- optionally at least a LED (V) emitting light visible to the human eye with a wavelength of 500-600 nm;
**characterized in that**
said lamps emits a percentage of blue light ranging 30-50%, preferably 35-50% of PAR.

5. LED lamp (10) according to claim 4, wherein said lamp constantly irradiates said percentage of blue light ranging 30-50%, preferably 35-50% of PAR, and such percentage of blue light is obtained by suitably choosing the combination of LEDs of the lamp.

6. LED lamp (10) according to claim 4, wherein said lamp variably irradiates said percentage of blue light ranging 30-50%, preferably 35-50% of PAR, and such percentage of blue light is obtained through a suitable electronic control of the LEDs (B, R, FR, V) of said lamp.

7. LED lamp (10) according to claim 6, provided with a control unit suitable for varying the spectrum emitted by said lamp, further preferably provided with a memory suitable for permanently saving different recipes for cultivating plants.

8. LED lamp (10) for performing the method according to claims 1-3, comprising blue LEDs only, which said lamp is combinable with lamps already installed in a greenhouse as a retrofit, which already installed lamps are free from blue spectral component or emit an insufficient blue light component, in order to fight the onset or the presence of fungal contamination in the cultivation.

9. Use of a LED lamp (10) emitting blue light for a percentage ranging 30-50%, preferably 35-50%, of the PAR for 10-20 hours a day for inhibiting the growth of fungal hyphae in cultivation systems provided with controlled light environments.

10. Use of blue light with a wavelength of 400-500 nm according to one or more of claims 1-3 for inhibiting the growth of fungal hyphae in cultivation systems provided with controlled light environments.
